# EUROPÄISCHE PATENTSCHRIFT

(11) **EP 1 353 466 B1**
(45) Veröffentlichungstag und Bekanntmachung des Hinweises auf die Patenterteilung: **14.02.2007**
(21) Anmeldenummer: 03100858.4
(22) Anmeldetag: 01.04.2003
(51) Int. Cl.: H04J 14/08

(54) **Verfahren zum Aufteilen eines optischen Signals in mehrere elektrische Datensignale mit kleinerer Bitrate**
Method for splitting an optical signal into a plurality of electrical data signals with lower bit rate
Procédé de division d'un signal optique en plusieurs signaux de données électriques à débit inférieur

(30) Priorität: 04.04.2002 DE 10214927
(43) Veröffentlichungstag der Anmeldung: 15.10.2003
(73) Patentinhaber: SIEMENS AKTIENGESELLSCHAFT, 80333 München (DE)
(72) Erfinder: Gottwald, Erich, 83607, Holzkirchen (DE)

(56) Entgegenhaltungen:
- US-A1- 2002 018 259

## Beschreibung

Die Erfindung betrifft ein Verfahren nach dem Oberbegriff des Anspruchs 1.

Signale mit hohen Datenraten über 40 Gbit/s können derzeitig noch nicht elektrisch verarbeitet werden. Deshalb werden Demultiplexschaltungen eingesetzt, die derartige Signale in mehrere Teilsignale kleinerer Bitraten aufteilen.

Bekannte Demultiplexschaltungen verwenden eine optische Pulsquelle, wie beispielsweise einen optischen voltage controlled oscillator, kurz VCO, im Zusammenwirken mit optischen Logikschaltungen, welche oft nichtlineare Effekte in optischen Wellenleitern nutzen. Dabei wird aus dem ankommenden Signal jedes n-te Bit selektiert.

Eine andere Möglichkeit besteht darin, einen VCO mit davon angesteuerten elektro-optischen Wandlern, wie beispielsweise Elektro-Absorptions-Modulatoren, kurz EAM, oder Mach-Zehner-Modulatoren, kurz MZM, zu verwenden. Dabei wird ebenfalls aus dem ankommenden Signal jedes n-te Bit selektiert.

Beide Anordnungen haben den Nachteil, das Sie relativ komplex aufgebaut und teuer sind. Außerdem sind diese Anordnungen polarisationsabhängig. Weiterhin ist ein stabiler Aufbau notwendig, insbesondere in thermischer Hinsicht, um Laufzeitdrifts zu vermeiden, die Bitfehler verursachen.

Dokument US 2002/018259 offenbart eine andere Demultiplexschaltung.

Die der Erfindung zugrunde liegende Aufgabe besteht nun darin, ein einfaches und stabiles Verfahren zum Demultiplexen eines optischen Signals in ein elektrisches Signal aufzuzeigen.

Dieses Problem wird durch die im Patentanspruch 1 aufgeführten Verfahrensmerkmale gelöst.

Die mit der Erfindung erzielten Vorteile bestehen darin, das Demultiplexen eines optischen Signals mit einfachen Mitteln zu realisieren. Das Verfahren ist polarisationsunabhängig und unempfindlich gegen Laufzeitdrifts, da das optische Datensignal und das Hilfssignal zur Bitselektion über einen gemeinsamen optischen Wellenleiter zum Entscheider übertragen werden und sowohl das Demultiplexen als auch die Phasendetektion im Entscheider bzw. der gleichen Photodiode stattfinden.

Vorteilhafte Ausgestaltungen der Erfindung sind in den Unteransprüchen angegeben.

Die Verwendung einer Photodiode mit einstellbaren oder regelbaren Arbeitspunkt hat den Vorteil, dass Entscheider und opto-elektrischer Wandler in einem Bauelement ausgeführt sind.

Die Verwendung unterschiedlicher Wellenlängen, vorzugsweise in verschiedenen optischen Fenstern, hat den Vorteil, dass durch den fehlenden wellenlängenbezogenen Überlapp kein Interferenzrauschen mit dem Rauschuntergrund des Datensignals, genannt amplified spontanous emissions, kurz ASE, auftritt, was zu wesentlich geringeren Anforderungen an das Signal zu Rauschverhältnis des Datensignals führt.

Die Verwendung einer Phasenregelung hat den Vorteil, dass die Bits des Datensignals immer optimal selektiert werden.

Die Verwendung eines Empfänger mit entsprechend geringer Bandbreite ist einfacher zu realisieren und dementsprechend kostengünstiger.

Die Erfindung ist insbesondere für die Aufteilung des optischen Datensignals in zwei elektrische Teilsignale geeignet, da in diesem Fall die Pulsquelle durch die Überlagerung zweier monochromatischer Signale, beispielsweise von Laserdioden, realisiert werden kann, was besonders einfach und kostengünstig ist. Durch die Verwendung dieser Laserdioden wird die Frequenz- und Phasenregelung des Hilfssignals stark vereinfacht.

Ein Ausführungsbeispiel der Erfindung wird im folgenden an Hand der Figur näher beschrieben. Dabei zeigt:

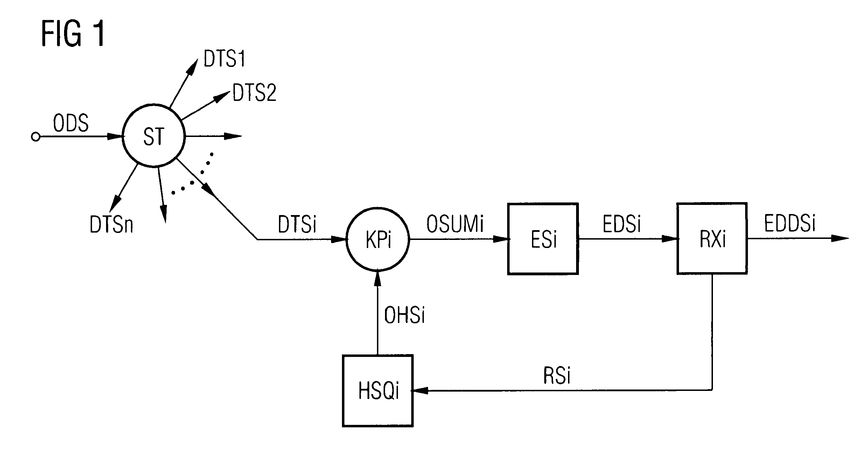

Figur 1 ein Blockschaltbild einer Anordnung zur Durchführung des Verfahrens.

Figur 1 zeigt den prinzipiellen Aufbau einer Anordnung zur Durchführung des erfindungsgemäßen Verfahrens. Das zu demultiplexende optische Datensignal ODS wird einem Signalteiler ST zugeführt, der es in n Datenteilsignale DTS1, DTS2, ... DTSn aufgeteilt.

Die einzelnen Datenteilsignale DTSi werden jeweils einem Koppler KPi zugeführt. Eine Hilfssignal-Quelle HSQi erzeugt jeweils ein optisches Hilfssignal OHSi gleicher Bitrate und Phase des Datenteilsignals DTSi, das ebenfalls dem Koppler KPi zugeführt wird. Jedes n-te Bit des Hilfssignals OHSi weist einen höheren Pegel auf. Die n optischen Hilfssignale sind jeweils um ein Bit gegeneinander phasenverschoben. Der Koppler KPi addiert das Datenteilsignal DTSi und das Hilfssignal OHSi zu einem optischen Summensignal OSUMi und gibt dieses an den Entscheider ESi ab.

Die Entscheiderschwelle des Entscheiders ESi liegt oberhalb der Amplitude des Datenteilsignals DTSi und unterhalb der Amplitude des Summensignals OSUMi, etwa in der Mitte zwischen beiden Amplituden.

Da nur jedes n-te Bit des optischen Summensignals OSUMi einen höheren Pegel aufweist, gibt jeder Entscheider ESi ein elektrisches Datensignal EDSi ab, das 1/n der Bitrate des optischen Datensignals ODS aufweist. Dieses wird jeweils einem Empfänger RXi zugeführt, dessen Bandbreite 1/n der Bandbreite des optischen Datensignals ist. Der Empfänger RXi gibt ein gedemultiplextes elektrisches Datenteilsignal EDDSI an seinem Ausgang ab.

Damit jedes Hilfssignal OHSi die richtige Phase bezogen auf das Datenteilsignal DTSi aufweist, wird vom Empfänger RXi ein Regelsignal RSi abgegeben, das der Hilfsignal-Quelle HSQi zugeführt wird.
Dabei erfolgt beispielsweise eine Synchronisation auf das n-te Bit im Empfänger RXi mit Hilfe von Codewörtern.

Um erhöhte Rauscheinflüsse durch ASE zu vermeiden, wird das optische Hilfssignal in einem anderen optischen Bereich/Fenster als das optische Datensignal erzeugt.

Als Entscheider wird eine Photodiode PHDi verwendet, deren Arbeitspunkt so gewählt ist, das nur ein erhöhter optischer Pegel, wie er bei jedem n-ten Bit des optischen Summensignals OSUMi im Falle einer logischen 1 auftritt, einen Photostrom hervorruft, der dem Empfänger RXi entsprechend niedriger Bandbreite zugeführt wird.

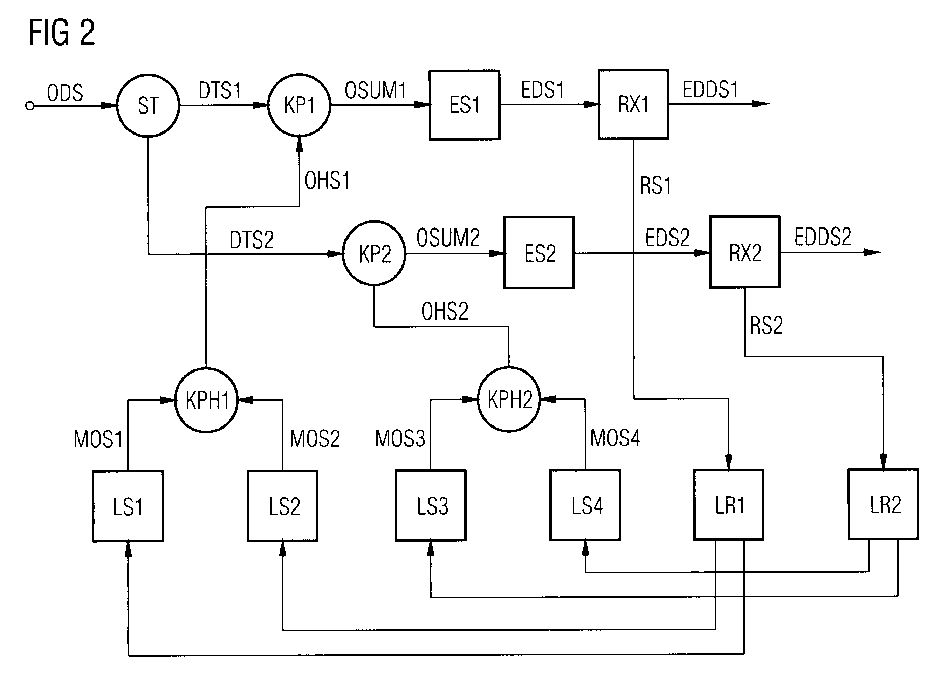

Eine besonders vorteilhafte Realisierung ergibt sich, wenn das optische Datensignal in zwei elektrische Signale aufgeteilt wird, wie Figur 2 zeigt. Dabei können die optischen Hilfssignale OHS1 und OHS2 jeweils durch die Modulation oder Überlagerung zweier monochromatischer optischer Signale MOS1 und MOS2 bzw. MOS3 und MOS4 erzeugt werden. Diese Signale können durch Laser LS1, ... LS4 erzeugt werden. Die Regelung des frequenz- und phasengenauen Hilfssignals OHSi kann vorteilhaft durch eine Laserregelung LR1 bzw. LR2 durchgeführt werden.

Die beiden monochromatischen optischen Signale MOS1 und MOS2 bzw. MOS3 und MOS4 werden dabei einem Koppler KPH1 bzw. KPH2 zugeführt der das optische Hilfssignal OHS1 bzw. OHS2 abgibt.

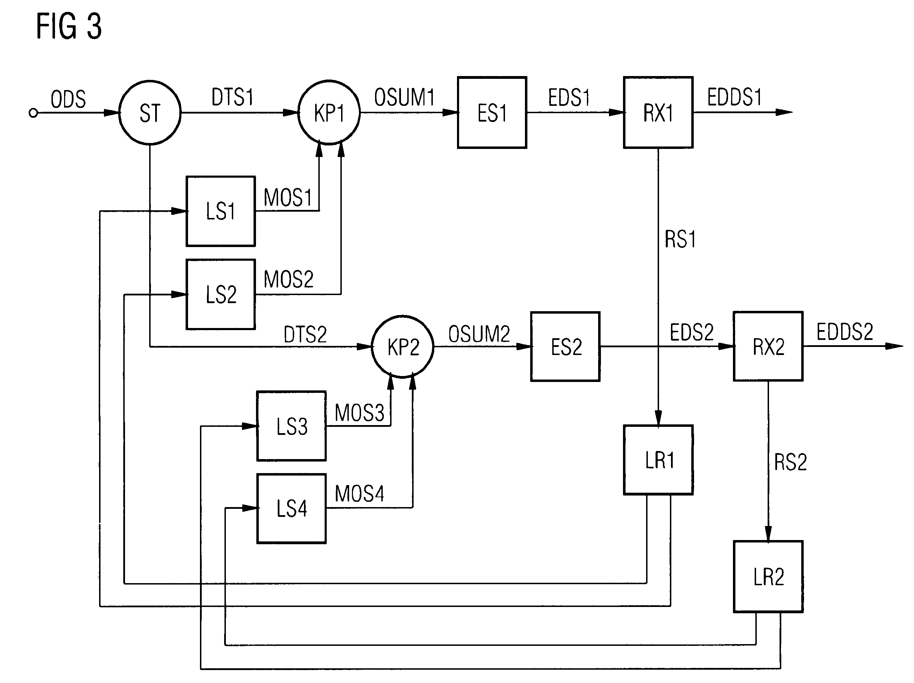

Figur 3 zeigt prinzipiell die gleiche Anordnung wie Figur 2, mit dem Unterschied, dass die monochromatischen optischen Signale MOS1 und MOS2 bzw. MOS3 und MOS4 direkt dem Koppler KP1 bzw. KP2 zugeführt werden.

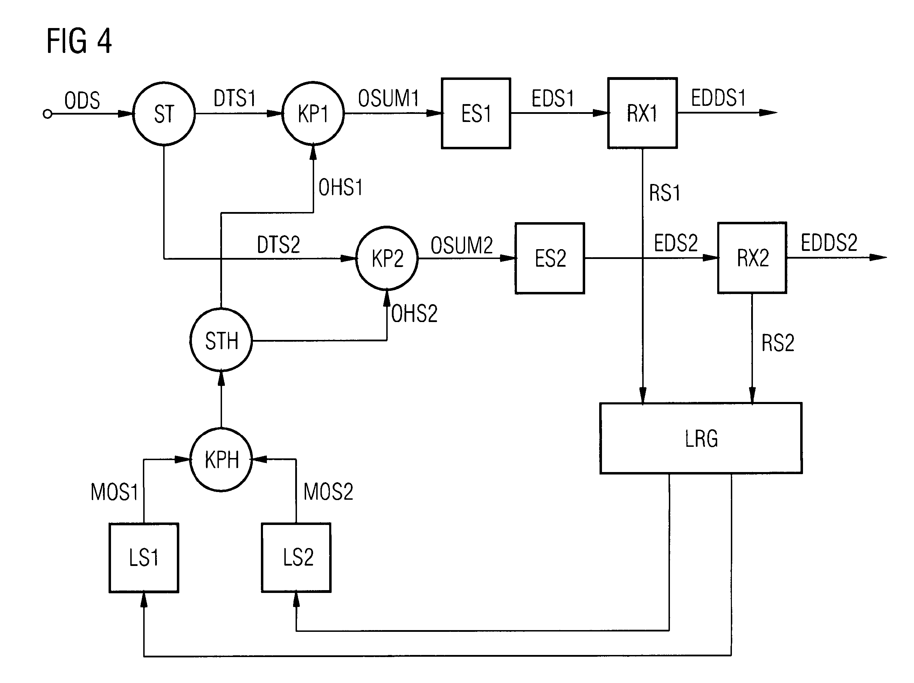

Figur 4 zeigt prinzipiell die gleiche Anordnung wie Figur 2, mit dem Unterschied, dass das zweite Hilfssignal OHS2 durch Verzögerung des ersten Hilfssignals OHS1 um die Dauer eines Bits erzeugt werden. In diesem Fall werden nur zwei Laser LS1 und LS2 benötigt, die eine gemeinsame Laserregelung LRG aufweisen. Die von den Lasern LS1 und LS2 abgegebenen monochromatischen optischen Signale MOS1 und MOS2 werden einem Koppler KPH zugeführt, dessen Ausgang mit dem Eingang eines Signalteilers STH verbunden ist, der ein optisches Hilfssignal OHS1 bzw. OHS2 abgibt.

Soll beispielsweise ein 80Gbit/s Signal gedemultiplext werden, wird zu beiden Datenteilsignale DTS1 und DTS2 je eines der Hilfssignale OHS1 und OHS2 addiert. Die Hilfssignale OHS1 und OHS2 weisen jeweils eine Frequenz von 40 GHz auf. Dieses wird durch eine Modulation zweier Laser, die eine Frequenzdifferenz von 40 GHz aufweisen, erzeugt. Dabei sind die absoluten Wellenlängen der Laser von untergeordneter Bedeutung. Sie sollten außerhalb des Wellenlängenbereichs des optischen Datensignals liegen, um zusätzliches Interferenzrauschen zwischen optischem Hilfssignal und dem Rauschuntergrund des Datensignals, genannt amplified spontanous emissions, kurz ASE, zu vermeiden.

## Patentansprüche

1. Verfahren zum Aufteilen eines optischen Datensignals (ODS) in n elektrische Datensignale (EDS1, EDS2, ... EDSn) mit niedrigerer Bitrate, wobei
das optische Datensignal (ODS) in n gleiche Datenteilsignale (DTS1, DTS2, ... DTSn) aufgeteilt wird, **dadurch gekennzeichnet, dass** zu jedem optischen Datenteilsignal (DTS1, DTS2, ... DTSn) jeweils ein optisches binäres Hilfssignal (OHS1, OHS2, ... OHSn) mit gleicher Bitrate und Phase wie das Datenteilsignal (DTS1, DTS2, ... DTSn) addiert wird, dessen jeweils n-tes Bit einen höheren Pegel aufweist, wobei die n optischen Hilfssignale (OHS1, OHS2, ... OHSn) jeweils um ein Bit gegeneinander phasenverschoben sind, so dass n Summensignale (OSUM1, OSUM2, ... OSUMn) erzeugt werden, die jeweils einem Entscheider (ES1, ES2, ... ESn) zugeführt werden, dessen Entscheiderschwelle oberhalb der Amplitude des Datenteilsignals (DTS1, DTS2, ... DTSn) und unterhalb der Amplitude des Summensignals (OSUM1, OSUM2, ... OSUMn), vorzugsweise in der Mitte zwischen beiden Amplituden liegt, so dass jeder Entscheider (ES1, ES2, ... ESn) ein elektrisches Datensignal (EDS1, EDS2, ... EDSn) mit 1/n - facher Bitrate des Datensignals (ODS) abgibt.

2. Verfahren nach Anspruch 1,
**dadurch gekennzeichnet,**
**dass** wenigstens ein Entscheider (ES1, ES2, ... ESn) als Photodiode mit einstellbarem oder geregeltem Arbeitspunkt ausgebildet ist.

3. Verfahren nach Anspruch 1 oder 2,
**dadurch gekennzeichnet,**
**dass** die Wellenlängen der Hilfssignale (OHS1, OHS2, ... OHSn) ungleich der Wellenlängen der optischen Datenteilsignals (DTS1, DTS2, ... DTSn) sind.

4. Verfahren nach einem der vorhergehenden Ansprüche,
**dadurch gekennzeichnet,**
**dass** die Wellenlängen der Hilfssignale (OHS1, OHS2, ... OHSn) in einem anderen optischen Fenster als die Wellenlänge der optischen Datenteilsignale (DTS1, DTS2, ... DTSn) liegen.

5. Verfahren nach einem der vorhergehenden Ansprüche,
**dadurch gekennzeichnet,**
**dass** jeweils die Phasendifferenz zwischen Datenteilsignal (DTS1, DTS2, ... DTSn) und zugehörigem Hilfssignal (OHS1, OHS2, ... OHSn) geregelt wird.

6. Verfahren nach einem der vorhergehenden Ansprüche,
**dadurch gekennzeichnet,**
**dass** die elektrischen Datensignale (EDS1, EDS2, ... EDSn) jeweils einem Empfänger (RX1, RX2, ... RXn) mit 1/n-facher Bandbreite zugeführt werden.

7. Verfahren nach einem der vorhergehenden Ansprüche,
**dadurch gekennzeichnet,**
**dass** das optische Datensignal (ODS) in zwei Datenteilsignale (DTS1, DTS2) aufgeteilt wird.

8. Verfahren nach Anspruch 7,
**dadurch gekennzeichnet,**
**dass** mindestens ein Hilfssignal (OHS1, OHS2) durch Modulation oder Überlagerung zweier monochromatischer optischer Signale (MOS1, MOS2) erzeugt werden.

9. Verfahren nach Anspruch 8,
**dadurch gekennzeichnet,**
**dass** ein frequenz- und phasengenaues optisches Hilfssignals (OHS1, OHS2) erzeugt wird, indem die Frequenz und/oder die Phase des ersten und/oder zweiten monochromatischen optischen Signals (MOS1, MOS2) geregelt wird.

10. Verfahren nach Anspruch 8 oder 9,
**dadurch gekennzeichnet,**
**dass** die monochromatischen optischen Signale (MOS1, MOS2) durch Laser erzeugt werden.

## Claims

1. Method for splitting an optical data signal (ODS) into n electrical data signals (EDS1, EDS2, ..., EDSn) with lower bit rates, **characterised in that**,
the optical data signal (ODS) is split into n equal data sub-signals (DTS1, DTS2, ..., DTSn),
an optical binary auxiliary signal (OHS1, OHS2, ..., OHSn) with the same bit rate and phase as the data sub-signal (DTS1, DTS2, ..., DTSn) is added to each optical data sub-signal (DTS1, DTS2, ..., DTSn), the n-th bit of each of which has a higher level, with the phases of each of the n optical auxiliary signals (OHS1, OHS2, ..., OHSn) showing a relative displacement of one bit, so that n aggregate signals (OSUM1, OSUM2, ..., OSUMn) are generated, each of which is fed to a decision-maker (ES1, ES2, ..., ESn), the decision-maker threshold of which is above the amplitude of the data sub-signal (DTS1, DTS2, ..., DTSn) and below the amplitude of the aggregate signal (OSUM1, OSUM2, ..., OSUMn), preferably in the centre between the two amplitudes, so that each decision-maker (ES1, ES2, ..., ESn) emits an electrical data signal (EDS1, EDS2, ..., EDSn) with 1/n times the bit rate of the data signal (ODS).

2. Method according to claim 1,
**characterised in that**
at least one decision-maker (ES1, ES2, ..., ESn) is configured as a photodiode with an adjustable or controllable operating point.

3. Method according to claim 1 or 2,
**characterised in that**
the wavelengths of the auxiliary signals (OHS1, OHS2, ..., OHSn) are not equal to the wavelengths of the optical data sub-signal (DTS1, DTS2, ..., DTSn).

4. Method according to one of the preceding claims,
**characterised in that**
the wavelengths of the auxiliary signals (OHS1, OHS2, ..., OHSn) are in a different optical window from the wavelength of the optical data sub-signals (DTS1, DTS2, ..., DTSn).

5. Method according to one of the preceding claims,
**characterised in that**
the phase difference between the data sub-signal (DTS1, DTS2, ..., DTSn) and the corresponding auxiliary signal (OHS1, OHS2, ..., OHSn) is controlled in each instance.

6. Method according to one of the preceding claims,
**characterised in that**
each of the electrical data signals (EDS1, EDS2, ..., EDSn) is fed to a receiver (RX1, RX2, ..., RXn) with 1/n times the bandwidth.

7. Method according to one of the preceding claims,
**characterised in that**
the optical data signal (ODS) is split into two data sub-signals (DTS1, DTS2).

8. Method according to claim 7,
**characterised in that**
at least one auxiliary signal (OHS1, OHS2) is generated by modulation or superimposition of two monochromatic optical signals (MOS1, MOS2).

9. Method according to claim 8,
**characterised in that**
a frequency-accurate and phase-accurate optical auxiliary signal (OHS1, OHS2) is generated by controlling the frequency and/or the phase of the first and/or second monochromatic optical signal (MOS1, MOS2).

10. Method according to claim 8 or 9,
**characterised in that**
the monochromatic optical signals (MOS1, MOS2) are generated by laser.

## Revendications

1. Procédé de division d'un signal optique de données (ODS) en n signaux électriques de données (EDS1, EDS2, ..., EDSn) de débit binaire moindre, **caractérisé en ce que** le signal optique de données (ODS) est divisé en n signaux de données partiels identiques (DTS1, DTS2, ..., DTSn), **en ce qu'**est additionné, à chaque signal de données optique partiel (DTS1, DTS2, ..., DTSn), respectivement un signal binaire optique auxiliaire (OHS1, OHS2, ..., OHSn) de même débit binaire et de même phase que le signal de données partiel (DTS1, DTS2, ..., DTSn) dont respectivement le n^{ième} bit présente un niveau supérieur, les n signaux optiques auxiliaires (OHS1, OHS2, ..., OHSn) présentant un décalage de phase de respectivement un bit les uns par rapport aux autres de sorte que n signaux de somme (OSUM1, OSUM2, ..., OSUMn) sont générés, lesquels sont respectivement amenés à un décideur (ES1, ES2, ..., ESn) dont le seuil de décision se trouve au-dessus de l'amplitude du signal de données partiel (DTS1, DTS2, ..., DTSn) et en dessous de l'amplitude du signal de somme (OSUM1, OSUM2, ..., OSUMn), de préférence au milieu entre les deux amplitudes, de sorte que chaque décideur (ES1, ES2, ..., ESn) délivre un signal électrique de données (EDS1, EDS2, ..., EDSn) avec 1/n fois le débit binaire du signal de données (ODS).

2. Procédé selon la revendication 1, **caractérisé en ce qu'**au moins un décideur (ES1, ES2, ..., Esn) est réalisé en tant que photodiode avec un point de travail ajustable ou réglé.

3. Procédé selon la revendication 1 ou 2, **caractérisé en ce que** les longueurs d'ondes des signaux auxiliaires (OHS1, OHS2, ..., OHSn) sont différentes des longueurs d'ondes des signaux de données optiques partiels (DTS1, DTS2, ..., DTSn) .

4. Procédé selon l'une des revendications précédentes, **caractérisé en ce que** les longueurs d'ondes des signaux auxiliaires (OHS1, OHS2, ..., OHSn) se trouvent dans une fenêtre optique autre que celle de la longueur d'onde des signaux de données optiques partiels (DTS1, DTS2, ..., DTSn).

5. Procédé selon l'une des revendications précédentes, **caractérisé par** le réglage respectivement de la différence de phase entre signal de données partiel (DTS1, DTS2, ..., DTSn) et signal auxiliaire associé (OHS1, OHS2, ..., OHSn).

6. Procédé selon l'une des revendications précédentes, **caractérisé en ce que** les signaux électriques de données (EDS1, EDS2, ..., EDSn) sont amenés respectivement à un récepteur (RX1, RX2, ..., RXn) avec 1/n fois la largeur de bande.

7. Procédé selon l'une des revendications précédentes, **caractérisé en ce que** le signal optique de données (ODS) est divisé en deux signaux de données partiels (DTS1, DTS2).

8. Procédé selon la revendication 7, **caractérisé par** la génération d'au moins un signal auxiliaire (OHS1, OHS2) par modulation ou superposition de deux signaux optiques monochromatiques (MOS1, MOS2).

9. Procédé selon la revendication 8, **caractérisé par** la génération d'un signal optique auxiliaire (OHS1, OHS2) exact en fréquence et en phase par réglage de la fréquence et/ou de la phase du premier et/ou du deuxième signal optique monochromatique (MOS1, MOS2).

10. Procédé selon la revendication 8 ou 9, **caractérisé par** la génération par laser des signaux optiques monochromatiques (MOS1, MOS2).
